# EUROPEAN PATENT APPLICATION

(11) **EP 4 685 683 A1**
(43) Date of publication of application: **28.01.2026**
(21) Application number: 23928216.3
(22) Date of filing: 26.06.2023
(51) Int. Cl.: G06F 30/17

(54) **MACHINING DATA PROCESSING SYSTEM AND MACHINING DATA PROCESSING METHOD**

(30) Priority: 22.03.2023 CN 202310295299
(71) Applicant: Intelligent Grinding Technology (Shenzhen) Co., Ltd., Shenzhen, Guangdong 518000 (CN)
(72) Inventor: WANG, Jinsheng, Shenzhen, Guangdong 518000 (CN); HUANG, Jie, Shenzhen, Guangdong 518000 (CN); ZHENG, Yonghao, Shenzhen, Guangdong 518000 (CN); BI, Xuefeng, Shenzhen, Guangdong 518000 (CN)
(74) Representative: Cabinet Chaillot
(86) International application number: PCT/CN2023/102492
(87) International publication number: WO 2024/192910

(57) **Abstract**

The application provides a machining data processing system and a machining data processing method. The machining data processing system includes: a data design system, a monitoring system and a quality inspection system, the data design system configured to determine a target machine tool and initial process parameters corresponding to a test project according to a quality requirements of the test project; the monitoring system configured to receive machining process data and machining target data, to generate process adjustment parameters based on the machining process data and the machining target data, a quality inspection system configured to receive quality inspection result of the machine product, and determine whether to transmit the process adjustment parameters to the data design system based on the product quality inspection result, to update the process parameters in the machining process parameter library in the data design system. This facilitates the refinement of process parameters in the data design system, ensuring smoother subsequent invocation of these parameters for machining processes, and improving the quality of finished products to better align with quality requirements.

## Description

This application claims priority to Chinese Patent Application No. 2023102952997, titled "Machining Data Processing System and Machining Data Processing Method," filed on March 22, 2023, the entire contents of which are incorporated herein by reference.

### FIELD

The present application relates to the field of machining technology, particularly to a machining data processing system and machining data processing method.

### BACKGROUND

Digital Twin (DT) creates a virtual model of a physical entity in a digital form, simulates the behaviour of the physical entity using data, and facilitates interaction and integration between the physical world and the digital world through virtual-real interaction feedback, data fusion analysis, and decision iteration and optimization, thereby enhancing or expanding the capabilities of the physical entity.

At present, energy consumption in the manufacturing industry has always been the main aspect of material consumption, and material consumption in machining systems has always been dominant. As environmental issues become more and more prominent, reducing material consumption is an important task for all manufacturing industries. How to apply digital twins in processing and manufacturing to make the entire processing process smoother, the quality of processed products more in line with quality requirements, and to reduce material consumption, has become a key issue of concern.

### SUMMARY

In order to solve the above technical problems existing in the prior art, the present application provides a machining data processing system and a machining data processing method.

To solve the above problems, the present application provides a machining data processing system, the machining data processing system comprising: a data design system, configured to determine a target machine tool and initial process parameters corresponding to a test project according to a quality requirements of the test project; a monitoring system, configured to receive machining process data which is generated when the target machine tool is controlled to machine the product based on the initial process parameters, to receive machining target data which is generated based on the initial process parameters, to generate process adjustment parameters based on the machining process data and the machining target data, and to transmit the process adjustment parameters to machine the product based on the process adjustment parameters; a quality inspection system, configured to receive quality inspection result of the machine product, and determine whether to transmit the process adjustment parameters to the data design system based on the product quality inspection result, to update the process parameters in the machining process parameter library in the data design system.

In an optional embodiment, wherein the monitoring system is further configured to extract target a data feature value from the machining target data, and to extract a machining process feature value corresponding to the target data feature value from the machining process data, and to compare the target data feature value with the machining process feature value and generate process adjustment parameters based on the comparison results

In an optional embodiment, further comprising a display system, configured to display the machining process of the target machine tool on the product and to display a quality prediction result of the product.

In an optional embodiment, wherein the data design system is configured to construct a machine tool model database and a machining process parameter library, so that the data design system 100 can predict the quality of the product based on the machine tool model database and the machining process parameter library.

In an optional embodiment, wherein the data design system is configured to receive a product model input by a model design software, and to determine a target machine tool model corresponding to the target machine tool from the machine tool model database based on the product model, and determine initial process parameters from the machining process parameter library.

In an optional embodiment, wherein the data design system is configured to transmit the target machine tool model and predicted process parameters to an auxiliary engineering software, so that the auxiliary engineering software generates the quality simulation results of the product model based on the target machine tool model and the predicted process parameters, and the data design system is future configured to receive the quality simulation results of the product model generated by the auxiliary engineering software.

In an optional embodiment, wherein the data design system is future configured to transmit the initial process parameters to the auxiliary manufacturing software, so that the auxiliary manufacturing software generates machining target data and machining codes for controlling the target machine tool to machine the product based on the initial process parameters.

In an optional embodiment, wherein the data design system is future configured to determine equipment factors of the target machine tool and/or fixed parameters and adjustment parameters in the initial process parameters according to the quality requirements of the test project.

In an optional embodiment,, wherein the step of determining whether to update the process parameters in the machining process parameter library using the process adjustment parameters based on the product quality inspection result, comprises: when the quality inspection result is that the product quality meets the preset quality requirements, then the process adjustment parameters corresponding to the preset quality requirements are used to update the process parameters in the machining process parameter library.

In an optional embodiment, wherein the step of determining whether to update the process parameters in the machining process parameter library using the process adjustment parameters based on the product quality inspection result, comprises: when the quality inspection result is that the product quality does not meet the preset quality requirements, the data generated during the process of machining the product based on the process adjustment parameters is as the machining process data, and returning to the step: generating process adjustment parameters based on the machining process data and the machining target data, transmitting the process adjustment parameters to machine the product based on the process adjustment parameters, until the quality inspection result is that the product quality meets the preset quality requirements; updating the process parameters in the machining process parameter library by using the process adjustment parameters corresponding to the preset quality requirements.

In an optional embodiment, wherein the step of generating process adjustment parameters based on the machining process data and the machining target data, comprises: extracting a target data feature value from the machining target data and extracting a machining process feature value corresponding to the target data feature value from the machining process data; comparing the target data feature value with the machining process feature value, and generating a process adjustment parameter based on the comparison result

In an optional embodiment, future comprising: extracting the operating parameters of the target machine tool; displaying the machining process of the machine tool on the product based on the operating parameters.

In an optional embodiment, before determining the target machine tool and initial process parameters corresponding to the test project according to the quality requirements of the test project, future comprising: collecting machine tool model data and process parameter data; generating a machine tool model database based on the machine tool model data; generating machining process parameter library based on the process parameter data.

In an optional embodiment, after generating a machining process parameter library based on the process parameter data, future comprising: extracting model features of the product model; determining the target machine tool model corresponding to the target machine tool from the machine tool model database based on the model features, and determining the initial process parameters from the machining process parameter library

In an optional embodiment, after generating machining process parameter library on based on the process parameters data, future comprising: determining the target machine tool model corresponding to the target machine tool from the machine tool model database, and determining predicted process parameters from the machining process parameter library; transmitting the target machine tool model and the predicted process parameters to the auxiliary engineering software, to make the auxiliary engineering software generate simulation results for the product model based on the target machine tool model and the predicted process parameters; receiving the simulation results, and determining initial process parameters based on the simulation results.

In an optional embodiment, wherein the step of determining initial process parameters based on simulation results future comprises: based on the simulation results, the predicted process parameters, the target machine tool model and the model feature of the product model, performing quality prediction on the product corresponding to the product model, and obtaining a quality prediction result of the product; using the predicted process parameters as initial process parameters when it is detected that the quality prediction result meets the preset quality requirement.

In an optional embodiment, after the step of performing quality prediction on the product corresponding to the product model and obtaining the quality prediction result of the product, future comprising: displaying the quality prediction result.

In an optional embodiment, after the step of determining the target machine tool and initial process parameters corresponding to the test project according to the quality requirements of the test project, future comprising: transmitting the initial process parameters to an auxiliary manufacturing software, to make the auxiliary manufacturing software generate machining target data and machining codes for controlling the target machine tool to machine the product based on the initial process parameters.

In an optional embodiment, characterized in that, wherein the step of generating process adjustment parameters based on machining process data and machining target data future comprises: determining fixed parameters and adjustment parameters in the initial process parameters according to the quality requirements of the test project; generating process adjustment parameters for changing the adjustment parameters based on the machining process data and the machining target data.

To solve the above problems, the present application provides a machining data processing method, the machining data processing method comprising: determining a target machine tool and initial process parameters corresponding to a test project according to a quality requirements of the test project; receiving machining process data which is generated when the target machine tool is controlled to machine the product based on the initial process parameters and receiving machining target data which is generated based on the initial process parameters; generating process adjustment parameters based on the machining process data and the machining target data, and transmitting the process adjustment parameters to machine the product based on the process adjustment parameters; receiving quality inspection result of the machine product, and determining whether to update the process parameters in the machining process parameter library using the process adjustment parameters based on the product quality inspection result.

Compared with the prior art, the machining data processing system of the present application includes: a data design system, configured to determine a target machine tool and initial process parameters corresponding to a test project according to a quality requirements of the test project; a monitoring system, configured to receive machining process data which is generated when the target machine tool is controlled to machine the product based on the initial process parameters, to receive machining target data which is generated based on the initial process parameters, to generate process adjustment parameters based on the machining process data and the machining target data, and to transmit the process adjustment parameters to machine the product based on the process adjustment parameters; a quality inspection system, configured to receive quality inspection result of the machine product, and determine whether to transmit the process adjustment parameters to the data design system based on the product quality inspection result, to update the process parameters in the machining process parameter library in the data design system. Through the above implementation, it can determine whether to use the process adjustment parameters to update the process parameters in the machining process parameter library in the data design system according to the quality inspection results of the machined product, which can facilitate the improvement of the process parameters in the data design system, so that the subsequent process of calling the process parameters for machining is smoother, and the quality of the processed product is more in line with the quality requirements.

It is to be understood that the foregoing general description and the following detailed description are exemplary and explanatory only and are not restrictive of the present application.

### BRIEF DESCRIPTION OF THE DRAWINGS

In order to more clearly illustrate the embodiments of the present application or the technical solutions in the prior art, the drawings required for use in the embodiments will be briefly introduced below. Obviously, the drawings described below are only some embodiments of the present application. For ordinary technicians in this field, other drawings can be obtained based on these drawings without paying creative work.
FIG. 1 is a structure schematic block diagram of an embodiment of a processing data processing system provided by the present application;
FIG. 2 is a schematic flow chart of an embodiment of a machining data processing method provided by the present application;
FIG. 3 is a schematic diagram of a flow chart of an embodiment of generating process adjustment parameters provided by the present application;
FIG. 4 is a schematic diagram of a process flow of an embodiment of predicting product quality provided by the present application;
FIG. 5 is a schematic flow chart of an embodiment of determining initial process parameters based on simulation results provided by the present application.

### DESCRIPTION OF THE EMBODIMENTS

The present application is further described in detail below in conjunction with the accompanying drawings and examples. It is particularly noted that the following examples are only used to illustrate the present application, but are not intended to limit the scope of the present application. Similarly, the following examples are only some embodiments of the present application rather than all embodiments, and all other embodiments obtained by ordinary technicians in the field without making creative work are within the scope of protection of the present application.

Reference to "embodiments" herein means that a particular feature, structure, or characteristic described in conjunction with the embodiments may be included in at least one embodiment of the present application. The appearance of the phrase in various locations in the specification does not necessarily refer to the same embodiment, nor is it an independent or alternative embodiment that is mutually exclusive with other embodiments. It is explicitly and implicitly understood by those skilled in the art that the embodiments described herein may be combined with other embodiments.

In the description of this application, it should be noted that, unless otherwise clearly specified and limited, the terms "install", "set", "connect", and "connect" should be understood in a broad sense, for example, it can be a fixed connection, a detachable connection, or an integral connection; it can be a mechanical connection or an electrical connection; it can be directly connected or connected through an intermediate medium. For ordinary technicians in this field, the above-mentioned specific meanings belonging to this application can be connected according to specific circumstances.

Digital Twin (DT) creates a virtual model of a physical entity in a digital way, simulates the behaviour of the physical entity with the help of data, and promotes the interaction and integration of the physical world and the information world through virtual-reality interactive feedback, data fusion analysis, and iterative decision optimization, thereby adding or expanding new capabilities for the physical entity.

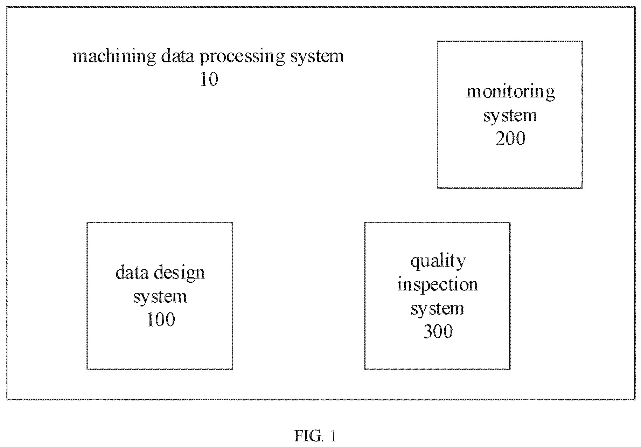

Based on the above technical foundation, the present application provides a machining data processing system. As shown in FIG.1, FIG.1 is a structure schematic block diagram of an embodiment of the machining data processing system provided by the present application.

The machining data processing system 10 includes a data design system 100, a monitoring system 200 and a quality inspection system 300.

The data design system 100 can be configured to determine a target machine tool and initial process parameters corresponding to a test project according to quality requirements of the test project. The test project can be determined according to the actual situation, for example, the test project includes a grinding project for the product or a cutting project for the product, etc. The quality requirements are that the product needs to be machined to meet the expected product, for example, the product to be machined needs to be ground to a finished product with a specific shape, etc. In this embodiment, the data design system 100 may include a machine tool model database and a machining process parameter library, the machine tool model database may include multiple types of machine tool models, each machine tool model may correspond to an actual machine tool, and the machining process parameter library may include various processing parameters, process signals during the machining process, grinding feed speed, grinding time, allowance allocation of rough grinding and fine grinding, etc. Different test projects have different machine tool model databases and different machining process parameter libraries. In this embodiment, the target machine tool and initial process parameters corresponding to the test project can be selected from the data design system 100 according to the quality requirements of the test project, wherein the target machine tool may be the actual machine tool corresponding to the machine tool model in the machine tool model database.

The monitoring system 200 is configured to receive the machining process data and the machining target data, the machining process data being generated when the target machine tool is controlled to machine the product based on the initial process parameters, the machining target data being generated based on the initial process parameters. Specifically, on one hand, after determining the target machine tool and the initial process parameters, the data design system 100 can transmit the initial process parameters to the control system, so that the control system can control the target machine tool to machine the product based on the initial process parameters. The control system can generate machining process data during the process of machining the product, and the control system can transmit the generated machining process data to the monitoring system 200. On the other hand, the monitoring system 200 can receive the machining target data generated based on the initial process parameters, wherein the machining target data can be generated by the monitoring system 200 based on the initial process parameters, or by the data design system 100 based on the initial process parameters, or by other systems based on the initial process parameters, which is not limited here. The machining target data represents an ideal state of the machining process and machining results when the target machine tool machines the product following the initial process parameters according to the machining target data.

The monitoring system 200 is also configured to generate process adjustment parameters based on the machining process data and the machining target data, and transmit the process adjustment parameters to machine the product based on the process adjustment parameters. Specifically, after receiving the machining process data and the machining target data, the monitoring system 200 can compare the machining process data and the machining target data to generate the process adjustment parameters. The monitoring system can generate a control code based on the process adjustment parameters and transmit the control code to the control system, so that the control system machines the product based on the control code; or, the monitoring system 200 can directly transmit the process adjustment parameters to the control system, and the control system generates a control code based on the process adjustment parameters, and machines the product based on the control code. Real-time monitoring and real-time control can be achieved during the machining process.

The quality inspection system 300 is configured to receive the quality inspection result of machined products, and determine whether to transmit the process adjustment parameters to the data design system 100 based on the product quality inspection result, so as to update the machining process parameters in the machining process parameter library of the data design system 100. Specifically, the quality of the product can be inspected by other systems. During the machining process, the quality inspection system 300 can receive the quality inspection result of the machined products, and compare the product quality inspection result with the preset quality requirements. When the product quality inspection result meets the preset quality requirements, it is determined to transmit the process adjustment parameters to the data design system 100, so that the data design system 100 can update the machining process parameter library according to the process adjustment parameters. When the same test project is machined subsequently, the corresponding machining process parameters in the machining process parameter library can be directly called, so that the machined products can quickly meet the preset quality requirements.

Through the above-mentioned embodiments, whether to use process adjustment parameters to update the machining process parameters in the machining process parameter library of the data design system 100 can be determined based on the quality inspection result of the machined products, which can facilitate the improvement of the process parameters in the data design system 100, make the subsequent process of calling the process parameters for machining smoother, and make the quality of the machined products more in line with the quality requirements.

In some optional embodiments, the monitoring system 200 is further configured to extract a target data feature value from the machining target data, to extract a machining process feature value corresponding to the target data feature value from the machining process data, and to compare the target data feature value with the machining process feature value and generate process adjustment parameters based on the comparison results. Specifically, data feature value can be extracted according to actual conditions, and the feature value extracted in different test projects are different. For example, in some grinding test projects, the feature value may include: maximum fluctuation in the rough grinding rising stage, maximum value in rough grinding, maximum fluctuation in the rough grinding stable stage, mean value in the rough grinding stable stage, maximum fluctuation in the rough grinding stable stage, maximum value in rough grinding, mean value in the rough grinding stable stage, etc. After extracting the machining target data and the machining process data, the monitoring system 200 can perform feature extraction in the machining target data to obtain the target feature value, and extract the machining process feature value from the machining process data, and then generate the process adjustment parameters by comparing the feature values. Therefore, by selecting the feature values and generating the process adjustment parameters by comparing the feature values, the generation of the process adjustment parameters can be faster and the process parameter library can be improved more quickly.

In some optional embodiments, the data design system 100 is also configured to construct a machine tool model database and a machining process parameter library, so that the data design system 100 can predict the quality of the product based on the machine tool model database and the machining process parameter library. Specifically, the data design system 100 can receive data to construct a machine tool model database and a machining process parameter library, and the data can be manually entered or directly transmitted to the data design system 100 through an external device. Exemplarily, when constructing the machine tool model database, all the precision elements of the machine tool can be considered at the same time, such as positioning accuracy, static rigidity, dynamic characteristics, thermal deformation, etc. Exemplarily, when constructing the machining process parameter library, data such as machining features, cutter tools, machining process, core parameters during the machining process, processing quality, and/or the relationship between multiple characteristics, etc. can be considered at the same time. After the data design system 100 completes the construction of the machine tool model database and the machining process parameter library, the data design system 100 can call the data in the machine tool model database and the machining process parameter library to predict the quality of the product. For example, the data design system 100 can receive a product model corresponding to the product, select a machine tool model and process parameters according to the product model, and the data design system 100 predicts the quality of the product according to the selected process parameters and machine tool model, so that before the actual machining, the quality prediction result of the product can be preliminarily obtained, which can make the subsequent process of calling the process parameters for machining smoother, and make the quality of the processed product more in line with the quality requirements, thereby improving the yield of the processed products.

Further, the data design system 100 is configured to receive the product model input by the model design software, and determine the target machine tool model corresponding to the target machine tool from the machine tool model database based on the product model, and determine the initial process parameters from the machining process parameter library. The model design software may include Maya, 3Ds Max, Blender, Rhino, CAD, SolidWorks, etc. The model design software can be configured to generate a product model and output the product model to the data design system 100. The data design system 100 receives the product model input by the model design software, and then extracts features from the product model to obtain model features of the product model. The data design system 100 can determine the target machine tool model corresponding to the target machine tool from the machine tool model database based on the model features of the product model, and determine the initial process parameters from the machining process parameter library.

In some optional embodiments, the data design system 100 is also configured to transmit the target machine tool model and the predicted process parameters to auxiliary engineering software, so that the auxiliary engineering software generates the quality simulation results of the product model based on the target machine tool model and the predicted process parameters, and the data design system 100 is also configured to receive the quality simulation results of the product model generated by the auxiliary engineering software. The target machine tool model and the predicted process parameters can be determined by the model features of the product model, and the auxiliary engineering software can be a simulation software such as CAE. The data design system 100 can transmit the product model, the target machine tool model and the predicted process parameters to the auxiliary engineering software. After receiving the product model, the target machine tool model and the predicted process parameters, the auxiliary engineering software can simulate the result of machining the product model according to the target machine tool model and the predicted process parameters and obtain the quality simulation result of the product model. The auxiliary engineering software then transmits the quality simulation result to the data design system 100, and the data design system 100 receives the quality simulation result so as to use the quality simulation result to predict the quality of the product.

In some optional embodiments, the data design system 100 is also configured to transmit the initial process parameters to the auxiliary manufacturing software, so that the auxiliary manufacturing software generates machining target data and machining codes for controlling the target machine tool to machine the product based on the initial process parameters. The auxiliary manufacturing software can be computer-aided manufacturing (CAM). After the data design system 100 determines the initial process parameters, the data design system 100 can transmit the initial process parameters to the CAM software through a CAM interface (such as an NX interface), and generate machining codes and machining target data based on the initial process parameters through the CAM software. After that, the CAM software transmits the machining target data to the monitoring system 200, and transmits the machining code to the control system, so as to facilitate the subsequent update of the process parameters in the machining process parameter library.

In some optional embodiments, the machining data processing system 10 further includes a display system, which is configured to display the machining process of the target machine tool on the product and to display the quality prediction result of the product. The display system can display the machining process of the machine tool on the product, so as to give people intuitive visual experience, and at the same time, the real-time response of the machine tool while machining parts in the form of process data. The display system can also display the quality prediction results of the product, so that the various quality inspection results of the relevant features of the parts during machining process can be predicted in combination with the digital twin model during the machining process, and the results that are most probable during machining process can be displayed in real time.

In some optional embodiments, the data design system 100 is also configured to determine equipment factors of the target machine tool and/or the fixed parameters and adjustment parameters in the initial process parameters according to the quality requirements of the test project. The equipment factors of the machine tool include factors that may affect the machining results of the target machine tool during the machining process, for example, the equipment factors may include the model of the cutting tool, the model of the grinding wheel, the number of grinding wheels, the data of the equipment vibration, the data of the equipment load, etc. The initial process parameters may include various machining parameters, process signals during the machining process, the feed speed of grinding, the grinding time, the allocation of rough and fine grinding allowances, etc. The fixed parameters refer to parameters whose modifications do not affect product quality in the current test project, for example, in some embodiments, the fixed parameters can include machining parameters and process signals during the machining process; the adjustment parameters refer to parameters whose modifications affect product quality in the current test project, for example, in some embodiments, the adjustment parameters can include the feed speed of grinding, the grinding time, the allocation of rough and fine grinding allowances, etc. In this embodiment, by determining the equipment factors of the target machine tool, the fixed parameters and adjustment parameters in the initial process parameters, parameter library only the changes in the adjustment parameters need to be focused on while updating the machining process parameter library, which can reduce the difficulty of updating the machining process parameter library and facilitate the improvement of the process parameters in the data design system 100.

Through the above-mentioned embodiments, it is possible to determine whether to use process adjustment parameters to update the process parameters in the machining process parameter library of the data design system 100 based on the quality inspection result of the processed products, which can facilitate the improvement of the process parameters in the data design system 100, make the subsequent process of calling the process parameters for machining smoother, and make the quality of the processed products more in line with the quality requirements.

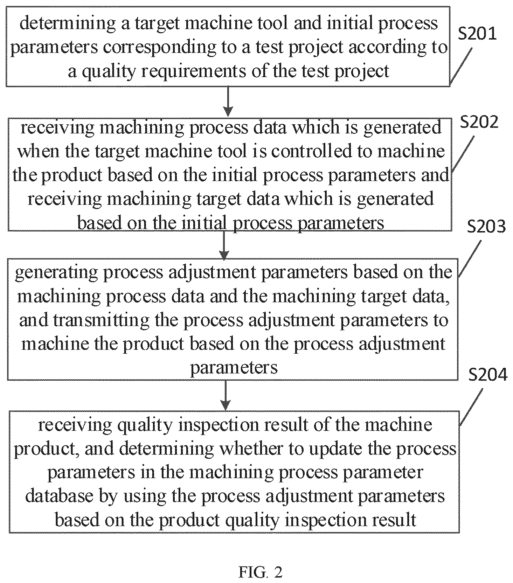

In order to solve the technical problems existing in the prior art, the present application also provides a machining data processing method, which can be applied to a machining processing system. As shown in FIG.2, FIG.2 is a flow chart of an embodiment of the machining data processing method provided by the present application, specifically, including the following steps S201 to S204.

Step S201: a target machine tool and initial process parameters corresponding to a test project are determined according to quality requirements of the test project.

The test projects can be determined according to the actual situation, for example, the test projects include grinding products or cutting products, etc. The quality requirement is that the processed product needs to conform to expectations, for example, the product to be machined needs to be ground to a finished product with a specific shape. In this embodiment, the target machine tool and the initial process parameters can be selected from the data design system, and the data design system may include a machine tool model database and a machining process parameter library. The machine tool model database may include multiple types of machine tool models, each machine tool model may correspond to an actual machine tool, and the machining process parameter library may include various processing parameters, process signals during the machining process, grinding feed speed, grinding time, rough and fine grinding allowance allocation, etc. Different machine tool model databases and different machining process parameter library may be provided for different test projects. In this embodiment, the target machine tool and initial process parameters corresponding to the test project can be selected from the data design system according to the quality requirements of the test project, wherein the target machine tool may be the actual machine tool corresponding to the machine tool model in the machine tool model database.

Step S202: machining process data generated by controlling the target machine tool to machine the product based on the initial process parameters and machining target data generated based on the initial process parameters are received.

The monitoring system may receive machining process data and machining target data. On one hand, after determining the target machine tool and the initial process parameters, the data design system may transmit the initial process parameters to the control system, so that the control system controls the target machine tool to machine the product based on the initial process parameters. The control system generates machining process data in the process of machining the product, and the control system may transmit the generated processing data to the monitoring system. On the other hand, the monitoring system may receive machining target data generated based on the initial process parameters, wherein the machining target data may be generated by the monitoring system based on the initial process parameters, or by the data design system based on the initial process parameters, or by other systems based on the initial process parameters, which is not limited here. The machining target data represents an ideal state of the machining process and machining results when the target machine tool machines the product following the initial process parameters according to the machining target data.

Step S203: process adjustment parameters are generated based on the machining process data and the machining target data, the process adjustment parameters are transmitted to machine the product based on the process adjustment parameters.

The monitoring system can generate process adjustment parameters. After receiving the machining process data and the machining target data, the monitoring system can compare the machining process data and the machining target data to generate process adjustment parameters. The monitoring system can generate control codes according to the process adjustment parameters and transmit control codes to the control system, so that the control system machine the product based on the control codes. Alternatively, the monitoring system can directly transmit the process adjustment parameters to the control system, and the control system can generate control codes based on the process adjustment parameters and machine the products based on the control codes. Real-time monitoring and real-time control of the processing process are thus achieved.

Step S204: the product quality inspection result is received after machining the product, and whether to update the process parameters in the machining process parameter library by using the process adjustment parameters is determined based on the product quality inspection result.

The monitoring system can receive the quality inspection result of the machined products and determine whether to use the process adjustment parameters to update the process parameters in the machining process parameter library. The quality inspection process can be implemented through other systems. During the machining process, the quality inspection system can receive the quality inspection result of the processed products and compare the product quality inspection result with the preset quality requirements. When the product quality inspection result meet the preset quality requirements, it is determined to transmit the process adjustment parameters to the data design system, so that the data design system can update the machining process parameter library according to the process adjustment parameters. When the same test project is processed subsequently, the corresponding process parameters in the machining process parameter library can be directly called, which can quickly make the processed products meet the preset quality requirements.

Through the above embodiment, whether to use process adjustment parameters to update the process parameters in the machining process parameter library of the data design system can be determined based on the quality inspection result of the machined product, which can facilitate the improvement of the process parameters in the data design system, make the subsequent process of calling the process parameters for machining smoother, and make the quality of the processed product more in line with the quality requirements.

In one embodiment, the step of determining whether to update the process parameters in the machining process parameter library using the process adjustment parameters based on the product quality inspection result (step S104) includes: when the quality inspection result is that the product quality meets the preset quality requirements, then the process adjustment parameters corresponding to the preset quality requirements are used to update the process parameters in the machining process parameter library. When the product quality inspection result meets the preset quality requirements, it is determined that the process adjustment parameters are transmitted to the data design system, so that the data design system can update the machining process parameter library according to the process adjustment parameters. When the same test project is processed subsequently, the corresponding process parameters in the processing process parameter library can be directly called, so that the processed product can quickly meet the preset quality requirements.

When the product quality inspection result does not meet the preset quality requirements, the process adjustment parameters can be generated again. Specifically, the step of determining whether to use the process adjustment parameters to update the process parameters in the machining process parameter library based on the product quality inspection result (step S104) includes: when the quality inspection result is that the product quality does not meet the preset quality requirements, the data generated during the process of machining the product based on the process adjustment parameters is used as the machining process data, and returning to the step: generating process adjustment parameters based on the machining process data and the machining target data, transmitting the process adjustment parameters to machine the product based on the process adjustment parameters, until the quality inspection result is that the product quality meets the preset quality requirements; updating the process parameters in the machining process parameter library by using the process adjustment parameters corresponding to the preset quality requirements. When the product quality inspection result does not meet the preset quality requirements, the process adjustment parameters can be generated again, and it is re-determined whether the machined product through the process adjustment parameters meets the preset quality requirements. When the machined product meets the preset quality requirements, the process adjustment parameters corresponding to the preset quality requirements are used to update the process parameters in the machining process parameter library. When the machined product still does not meet the preset quality requirements, the above steps are repeated again until the processed product meets the preset quality requirements.

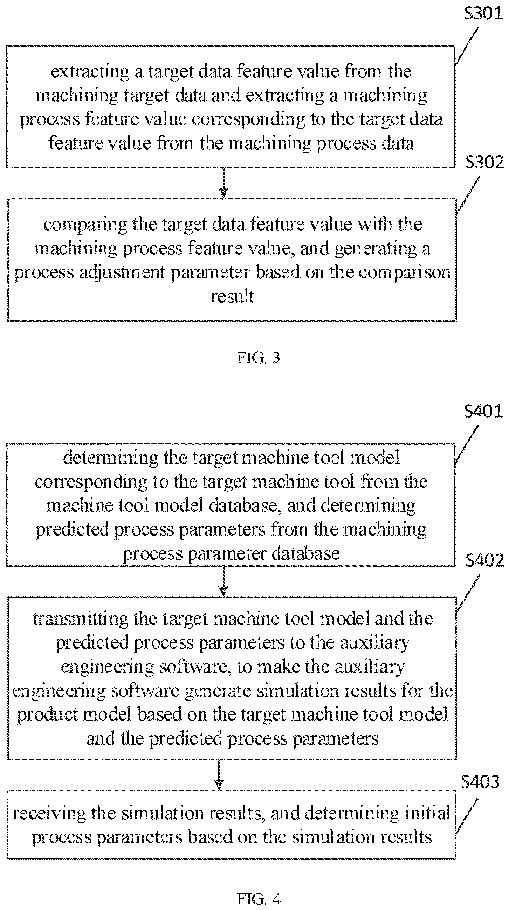

Referring to FIG. 3, FIG. 3 is a schematic flow chart of an embodiment of generating process adjustment parameters provided by the present application, specifically, comprising the following steps S301 to S302.

Step S301: a target data feature value is extracted from the machining target data and a machining process feature value corresponding to the target data feature value is extracted from the machining process data.

The extraction of data feature value can be realized through the monitoring system. The data feature value can be extracted according to the actual situation. The feature values extracted in different test projects are different. For example, in some grinding test projects, the feature values may include: the maximum fluctuation in the rough grinding rising stage, the maximum value in the rough grinding, the maximum fluctuation in the rough grinding stable stage, the mean value in the rough grinding stable stage, the maximum fluctuation in the rough grinding stable stage, the maximum value in the rough grinding, the mean value in the rough grinding stable stage, etc. After extracting the machining target data and the machining process data, the monitoring system can perform feature extraction in the machining target data to obtain the target feature value, and extract the machining process feature value in the processing process data.

Step S302: the target data feature values are compared with the machining process feature value, and process adjustment parameters are generated based on the comparison result.

The target data feature values and the machining process feature values are compared, and the process adjustment parameters are generated based on the comparison result. Therefore, by selecting feature values and generating process adjustment parameters by comparing the feature values, the generation of process adjustment parameters can be made faster, thereby more rapidly improving the process parameter library.

In some optional embodiments, before determining the target machine tool and initial process parameters corresponding to the test project according to the quality requirements of the test project, the machining data processing method includes: collecting machine tool model data and process parameter data; generating a machine tool model database based on the machine tool model data; and generating the machining process parameter library based on the process parameter data.

The data design system can be used to collect the machine model data and the process parameter data and construct a machine model database and a processing parameter library. Specifically, the data design system can receive machine model data and process parameter data to construct a machine model database and a process parameter library. The data can be manually entered or directly transmitted to the data design system through an external device. Exemplarily, when constructing the machine model database, all the precision elements of the machine tool can be considered at the same time, such as positioning accuracy, static rigidity, dynamic characteristics, thermal deformation, etc. Exemplarily, when building the processing parameter library, data such as machining features, cutter tools, machining process, core parameters of the machining process, processing quality, and/or the relationship between multiple characteristics can be considered at the same time. the machine model database and the machining process parameter library constructed by the data design system can facilitate, among others, the selection of initial process parameters and target machine tools, the simulation of product quality using initial process parameters and machine model, as well as the prediction of product quality.

In some optional embodiments, after generating a machining process parameter library based on the process parameter data, the machining data processing method includes: extracting model features of the product model; determining the target machine tool model corresponding to the target machine tool from the machine tool model database based on the model features, and determining the initial process parameters from the machining process parameter library. The data design system can be used to extract the model features from the product model , and determine the target machine tool model and the initial process parameters. The product model can be output by the model design software, and the model design software can include Maya, 3Ds Max, Blender, Rhino, CAD, SolidWorks, etc. The data design system receives the product model input by the model design software, performs feature extraction to the product model to obtain the model features of the product model, and determines the target machine tool model corresponding to the target machine tool from the machine tool model database based on the model features of the product model, and determines the initial process parameters from the machining process parameter library.

Referring to FIG.4, FIG.4 is a schematic flow chart of an embodiment of predicting product quality provided by the present application, specifically, including the following steps S401 to S403.

Step S401: a target machine tool model corresponding to a target machine tool is determined from a machine tool model database, and predicted process parameters are determined from a machining process parameter library.

The step of determining the predicted process parameters and the target machine tool model can be achieved through the data design system. Specifically, the predicted process parameters and the target machine tool model can be selected based on the model features of the product model. The product model can be imported through the model design software. After receiving the product model, the data design software can extract the model features of the product model to select the predicted process parameters and the target machine tool model. Alternatively, the target machine tool model and the predicted process parameters can also be determined manually; alternatively, the target machine tool model and the predicted process parameters can also be determined according to the quality requirements of the test project. The specific method for determining the target machine tool model and the predicted process parameters is not specifically limited in this embodiment.

Step S402: the target machine tool model and the predicted process parameters are transmitted to the auxiliary engineering software, so that the auxiliary engineering software generates simulation results for the product model based on the target machine tool model and the predicted process parameters.

The data design system can transmit the target machine tool model and predicted process parameters to the auxiliary engineering software. The auxiliary engineering software can be simulation software such as CAE. After receiving the target machine tool model and predicted process parameters, the auxiliary engineering software can generate quality simulation results for the product model.

Step S403: the simulation results are received, and initial process parameters are determined based on the simulation results.

The data design system can receive the quality simulation results transmitted by the auxiliary engineering software, and then determine the initial process parameters based on the quality simulation results. For example, when the quality simulation results meet the preset quality requirements, the predicted process parameters can be directly used as the initial process parameters.

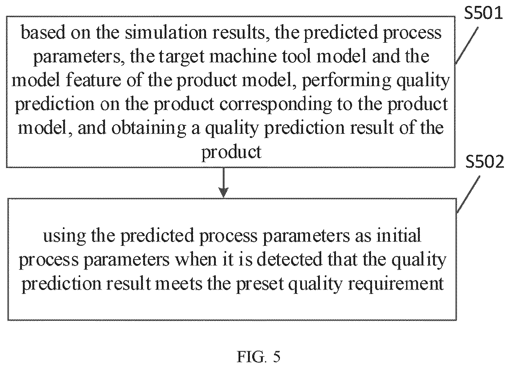

Referring to FIG.5, FIG.5 is a schematic flow chart of an embodiment of determining initial process parameters based on simulation results provided by the present application, specifically, including the following steps S501 to S502.

Step S501: based on the simulation results, the predicted process parameters, the target machine tool model and the model features of the product model, quality prediction is performed on a product corresponding to the product model to obtain a quality prediction result of the product.

The quality prediction of the product can be realized through the design system. In this embodiment, in order to make the quality prediction of the product more accurate, in predicting the product quality, the quality simulation results of the product, the selected prediction process parameters, the target machine tool model and the model feature of the product model can be considered at the same time. And through relevant algorithms, the quality of the product is predicted to obtain the product quality prediction result.

Step S502: when it is inspected that the quality prediction result meets the preset quality requirement, the predicted process parameters are used as initial process parameters.

After the quality prediction result of the product is obtained, the data design system can inspect whether the quality prediction result meets the preset quality requirements. If it is inspected that the quality prediction result meets the preset quality requirements, the predicted process parameters are used as the initial process parameters. If it is inspected that the quality prediction result does not meet the preset quality requirements, the predicted process parameters can be adjusted according to the difference between the quality prediction result and the preset quality requirements, so as to determine the initial process parameters. Therefore, before the actual machining, the quality of the product can be predicted, and the quality prediction result of the product can be preliminarily obtained, which can make the subsequent process of calling the process parameters for machining smoother, and make the quality of the processed product more in line with the quality requirements, thereby improving the yield of the processed products.

In some optional embodiments, after the step of performing quality prediction on the product corresponding to the product model and obtaining the quality prediction result of the product (step S501), the machining data processing method includes: displaying the quality prediction result. The display of the quality prediction result can be achieved through a display system, and the display system can also display the quality prediction result of the product, so that in combination with the various quality inspection results of the relevant features of the parts during machining can be predicted by the digital twin model during the machining process, the results that are mostly probable can be displayed during the machining process in real time.

In some optional embodiments, the machining data processing method includes: extracting the operating parameters of the target machine tool; and displaying the machining process of the machine tool on the product based on the operating parameters. Displaying the machining process of the machine tool on the product can be achieved through a display system, which can display the machining process of the machine tool on the product, thereby giving people an intuitive visual experience, and at the same time displaying the real-time response of the machine tool when processing the part in the form of process data.

In some optional embodiments, after the step of determining the target machine tool and initial process parameters corresponding to the test project according to the quality requirements of the test project (step S201), the machining data processing method includes: transmitting the initial process parameters to the auxiliary manufacturing software, so that the auxiliary manufacturing software generates machining target data and machining codes for controlling the target machine tool to machine the product based on the initial process parameters. The auxiliary manufacturing software can be computer-aided manufacturing (CAM). After the data design system determines the initial process parameters, it can transmit the initial process parameters to the CAM software through the CAM interface (such as the NX interface), and the CAM software generates machining codes and machining target data based on the initial process parameters. After that, the CAM software transmits the machining target data to the monitoring system and the machining codes to the control system, so as to facilitate the subsequent update of the process parameters in the machining process parameter library.

In some optional embodiments, the step of generating process adjustment parameters based on machining process data and machining target data includes: determining fixed parameters and adjustment parameters in the initial process parameters according to the quality requirements of the test project; and generating process adjustment parameters for changing the adjustment parameters based on the machining process data and the machining target data.

The initial process parameters may include various machining parameters, process signals during the machining process, feed speed of grinding, grinding time, rough and fine grinding allowance allocation, etc. The fixed parameters can be considered as parameters whose changes will not affect the quality in this test project. For example, in some embodiments, the fixed parameters can include machining parameters and process signals during the machining process; the adjustment parameters can be considered as parameters whose changes will affect the quality in this test project. For example, in some embodiments, the adjustment parameters can include feed speed of grinding, grinding time, rough and fine grinding allowance allocation, etc. In this embodiment, by determining the fixed parameters and adjustment parameters in the initial process parameters, when updating the machining process parameter library, it is only necessary to pay attention to the changes in the adjustment parameters, which can reduce the difficulty of updating the machining process parameter library and facilitate the improvement of the process parameters in the data design system.

Through the above embodiments, whether to use process adjustment parameters to update the process parameters in the machining process parameter library of the data design system can be determined according to the quality inspection result of the machined product, which can facilitate the improvement of the process parameters in the data design system, make the subsequent process of calling the process parameters for machining smoother, and make the quality of the machined product more in line with the quality requirements.

In addition, if the above functions are implemented in the form of software functions and sold or used as independent products, they can be stored in a storage medium readable by a mobile terminal, that is, the present application also provides a storage device storing program data, the program data can be executed to implement the method of the above embodiments, and the storage device can be, for example, a USB flash drive, an optical disk, a server, etc. In other words, the present application can be embodied in the form of a software product, which includes a number of instructions for enabling a smart terminal to execute all or part of the steps of the method described in each embodiment.

In the description of the present application, the description with reference to the terms "one embodiment", "some embodiments", "example", "specific example", or "some examples" means that the specific features, structures, materials or characteristics described in conjunction with the embodiment or example are included in at least one embodiment of the present application. In this specification, the schematic representations of the above terms do not necessarily refer to the same embodiment or example. Moreover, the specific features, structures, materials or characteristics described can be combined in any one or more embodiments or examples in a suitable manner. In addition, those skilled in the art can combine and combine the different embodiments or examples described in this specification and the features of the different embodiments or examples without contradiction.

In addition, the terms "first" and "second" are used for descriptive purposes only and should not be understood as indicating or implying relative importance or implicitly indicating the number of the indicated technical features. Therefore, the features defined as "first" and "second" may explicitly or implicitly include at least one of the features. In the description of this application, the meaning of "plurality" is at least two, such as two, three, etc., unless otherwise clearly and specifically defined.

Any process or method description in a flowchart or otherwise described herein may be understood to represent a module, segment or portion of code that includes one or more executable instructions for implementing the steps of a specific logical function or process, and the scope of the preferred embodiments of the present application includes alternative implementations in which functions may not be performed in the order shown or discussed, including performing functions in a substantially simultaneous manner or in the reverse order depending on the functions involved, which should be understood by technicians in the technical field to which the embodiments of the present application belong.

The logic and/or steps represented in the flowchart or otherwise described herein, for example, can be considered as an ordered list of executable instructions for implementing the logical functions, and can be embodied in any computer-readable medium for use by an instruction execution system, device or apparatus (which can be a personal computer, server, network device or other system that can fetch instructions from the instruction execution system, device or apparatus and execute the instructions), or in combination with these instruction execution systems, devices or apparatuses. For the purpose of this specification, "computer-readable medium" can be any device that can contain, store, communicate, propagate or transmit a program for use by an instruction execution system, device or apparatus, or in combination with these instruction execution systems, devices or apparatuses. More specific examples of computer-readable media (a non-exhaustive list) include the following: an electrical connection with one or more wires (electronic device), a portable computer disk box (magnetic device), a random access memory (RAM), a read-only memory (ROM), an erasable and programmable read-only memory (EPROM or flash memory), a fiber optic device, and a portable compact disk read-only memory (CDROM). In addition, the computer-readable medium may even be paper or other suitable medium on which the program is printed, since the program may be obtained electronically, for example, by optically scanning the paper or other medium and then editing, interpreting or processing in other suitable ways if necessary, and then stored in a computer memory.

The above description is only an implementation method of the present application, and does not limit the patent scope of the present application. Any equivalent structure or equivalent process transformation made using the contents of the present application specification and drawings, or directly or indirectly applied in other related technical fields, are also included in the patent protection scope of the present application.

## Claims

1. A machining data processing system, **characterized in that**, the machining data processing system comprises:
a data design system, configured to determine a target machine tool and initial process parameters corresponding to a test project according to quality requirements of the test project;
a monitoring system, configured to receive machining process data which is generated when the target machine tool is controlled to machine the product based on the initial process parameters, to receive machining target data which is generated based on the initial process parameters, to generate process adjustment parameters based on the machining process data and the machining target data, and to transmit the process adjustment parameters to machine the product based on the process adjustment parameters;
a quality inspection system, configured to receive quality inspection result of the machine product, and determine whether to transmit the process adjustment parameters to the data design system based on the product quality inspection result, to update the process parameters in the machining process parameter library in the data design system.

2. The machining data processing system according to Claim 1, **characterized in that**, the monitoring system is further configured to extract a target data feature value from the machining target data, and to extract a machining process feature value corresponding to the target data feature value from the machining process data, and to compare the target data feature value with the machining process feature value and generate process adjustment parameters based on the comparison results.

3. The machining data processing system according to Claim 1, **characterized in that**, the machining data processing system further comprises a display system, configured to display the machining process of the target machine tool on the product and to display a quality prediction result of the product.

4. The machining data processing system according to Claim 1, **characterized in that**, the data design system is configured to construct a machine tool model database and a machining process parameter library, so that the data design system can predict the quality of the product based on the machine tool model database and the machining process parameter library.

5. The machining data processing system according to Claim 4, **characterized in that**, the data design system is configured to receive a product model input by a model design software, and to determine a target machine tool model corresponding to the target machine tool from the machine tool model database based on the product model, and to determine initial process parameters from the machining process parameter library.

6. The machining data processing system according to Claim 4, **characterized in that**, the data design system is configured to transmit the target machine tool model and predicted process parameters to an auxiliary engineering software, so that the auxiliary engineering software generates quality simulation results of the product model based on the target machine tool model and the predicted process parameters, and the data design system is future configured to receive the quality simulation results of the product model generated by the auxiliary engineering software.

7. The machining data processing system according to Claim 1, **characterized in that**, the data design system is further configured to transmit the initial process parameters to an auxiliary manufacturing software, so that the auxiliary manufacturing software generates machining target data and machining codes for controlling the target machine tool to machine the product based on the initial process parameters.

8. The machining data processing system according to any of Claim 1 to Claim 7, **characterized in that**, the data design system is further configured to determine equipment factors of the target machine tool and/or fixed parameters and adjustment parameters in the initial process parameters according to the quality requirements of the test project.

9. A machining data processing method, **characterized in that**, the machining data processing method comprises:
determining a target machine tool and initial process parameters corresponding to a test project according to quality requirements of the test project;
receiving machining process data which is generated when the target machine tool is controlled to machine the product based on the initial process parameters, and receiving machining target data which is generated based on the initial process parameters;
generating process adjustment parameters based on the machining process data and the machining target data, and transmitting the process adjustment parameters to machine the product based on the process adjustment parameters;
receiving a quality inspection result of the machined product, and determining whether to update the process parameters in the machining process parameter library by using the process adjustment parameters based on the quality inspection result.

10. The machining data processing system according to Claim 9, **characterized in that**, the step of determining whether to update the process parameters in the machining process parameter library using the process adjustment parameters based on the product quality inspection result, comprises:
when the quality inspection result is that the product quality meets the preset quality requirements, then the process adjustment parameters corresponding to the preset quality requirements are used to update the process parameters in the machining process parameter library.

11. The machining data processing system according to Claim 9, **characterized in that**, the step of determining whether to update the process parameters in the machining process parameter library using the process adjustment parameters based on the product quality inspection result, comprises:
when the quality inspection result is that the product quality does not meet the preset quality requirements, the data generated during the process of machining the product based on the process adjustment parameters is used as the machining process data, and returning to the step of generating process adjustment parameters based on the machining process data and the machining target data, transmitting the process adjustment parameters to machine the product based on the process adjustment parameters, until the quality inspection result is that the product quality meets the preset quality requirements;
updating the process parameters in the machining process parameter library by using the process adjustment parameters corresponding to the preset quality requirements.

12. The machining data processing system according to Claim 9, **characterized in that**, the step of generating process adjustment parameters based on the machining process data and the machining target data, comprises:
extracting a target data feature value from the machining target data and extracting a machining process feature value corresponding to the target data feature value from the machining process data;
comparing the target data feature value with the machining process feature value, and generating a process adjustment parameter based on the comparison result.

13. The machining data processing system according to Claim 9, **characterized by** further comprising:
extracting operating parameters of the target machine tool;
displaying the machining process of the machine tool on the product based on the operating parameters.

14. The machining data processing system according to Claim 9, **characterized by**, before determining the target machine tool and initial process parameters corresponding to the test project according to the quality requirements of the test project, further comprising:
collecting machine tool model data and process parameter data;
generating a machine tool model database based on the machine tool model data;
generating machining process parameter library based on the process parameter data.

15. The machining data processing system according to Claim 14, **characterized by**, after generating a machining process parameter library based on the process parameter data, further comprising:
extracting model features of the product model;
determining the target machine tool model corresponding to the target machine tool from the machine tool model database based on the model features, and determining the initial process parameters from the machining process parameter library

16. The machining data processing system according to Claim 14, **characterized by**, after generating machining process parameter library on based on the process parameters data, further comprising:
determining the target machine tool model corresponding to the target machine tool from the machine tool model database, and determining predicted process parameters from the machining process parameter library;
transmitting the target machine tool model and the predicted process parameters to the auxiliary engineering software, to make the auxiliary engineering software generate simulation results for the product model based on the target machine tool model and the predicted process parameters;
receiving the simulation results, and determining initial process parameters based on the simulation results.

17. The machining data processing system according to Claim 16, **characterized in that**, the step of determining initial process parameters based on simulation results further comprises:
based on the simulation results, the predicted process parameters, the target machine tool model and the model feature of the product model, performing quality prediction on the product corresponding to the product model to obtain a quality prediction result of the product;
using the predicted process parameters as initial process parameters when it is inspected that the quality prediction result meets the preset quality requirement.

18. The machining data processing system according to Claim 17, **characterized by**, after the step of performing quality prediction on the product corresponding to the product model to obtain the quality prediction result of the product, further comprising:
displaying the quality prediction result.

19. The machining data processing system according to Claim 9, **characterized by**, after the step of determining the target machine tool and initial process parameters corresponding to the test project according to the quality requirements of the test project, further comprising:
transmitting the initial process parameters to an auxiliary manufacturing software, to make the auxiliary manufacturing software generate machining target data and machining codes for controlling the target machine tool to machine the product based on the initial process parameters.

20. The machining data processing system according to any of Claim 9 to Claim 19, **characterized in that**, the step of generating process adjustment parameters based on machining process data and machining target data further comprises:
determining fixed parameters and adjustment parameters in the initial process parameters according to the quality requirements of the test project;
generating process adjustment parameters for changing the adjustment parameters based on the machining process data and the machining target data.
